# EUROPEAN PATENT APPLICATION

(11) **EP 4 806 749 A1**
(43) Date of publication of application: **16.09.2026**
(21) Application number: 25162939.0
(22) Date of filing: 11.03.2025
(51) Int. Cl.: B60W 40/12, B60C 23/06

(54) **TIRE PROPERTY SENSOR SYSTEM**

(71) Applicant: Volvo Truck Corporation, 405 08 Göteborg (SE)
(72) Inventor: Marzbanrad, Alireza, 417 65 Göteborg (SE); Romano, Luigi, 417 65 Göteborg (SE); Rydström, Jan Mats Åke, 427 39 Billdal (SE); Jonasson, Mats, 433 49 Partille (SE); Kumru, Murat, 413 06 Göteborg (SE)
(74) Representative: AWA Sweden AB

(57) **Abstract**

The present disclosure relates to a tire property sensor system (100) for a tire (2) of a road vehicle (1000), the system (100) comprising: a plurality of vibration sensors (1) arranged inside the tire (2) and distributed along a circumference of the tire (2), each vibration sensor (1) of the plurality of vibration sensors (1) being configured to generate signals in response to vibrations during driving conditions; and a processing circuit (3) communicatively connected to the plurality of vibration sensors (1); wherein the processing circuit (3) is configured to execute the functions of: for each vibration sensor (1), annotating the vibration sensor (1), including assigning a respective angular position in relation to at least a neighboring vibration sensor (1); receiving signals from the plurality of vibration sensors (1); recording, based on the received signals, acoustic data of the tire (2); analyzing the acoustic data of the tire (2) and estimating at least one dynamic tire property parameter of the tire (2).

## Description

### TECHNICAL FIELD

The disclosure relates generally to monitoring of tires. In particular aspects, the disclosure relates to tire property sensor systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Estimating the tire properties and operating conditions is essential for vehicle motion management prediction and control layer. Tires represent the primary interface between the vehicle and the ground, where the most vehicle dynamics properties are determined. Tire inflation pressure, vertical and torsional stiffness, rotational speed, contact patch length and tire-road friction are not only time-varying but also dependent on several other variables. Thus, estimating these properties with current sensors is a challenge.

### SUMMARY

According to a first aspect of the disclosure, a tire property sensor system for a tire of a road vehicle is provided, the system comprising: a plurality of vibration sensors arranged inside the tire and distributed along a circumference of the tire, each vibration sensor of the plurality of vibration sensors being configured to generate signals in response to vibrations during driving conditions; and a processing circuit communicatively connected to the plurality of vibration sensors; wherein the processing circuit is configured to execute the functions of: for each vibration sensor, annotating the vibration sensor, including assigning a respective angular position in relation to at least a neighboring vibration sensor; receiving signals from the plurality of vibration sensors; recording, based on the received signals, acoustic data of the tire; analyzing the acoustic data of the tire and estimating at least one dynamic tire property parameter of the tire. The first aspect of the disclosure may seek to improve estimation of dynamic tire properties. A technical benefit may include more accurate estimations of dynamic tire properties.

Within the context of the present application, a *"dynamic tire property parameter"* is to be understood as a parameter of a property of the tire during dynamic conditions, i.e. during conditions when the tire is moving and/or under influence of external forces. The at least one dynamic tire property parameter of the tire may be selected from the list of dynamic tire properties consisting of: contact patch length, effective rolling radius, tire rotational speed, tire strain, tire-surface utilized friction and tire wear.

Within the context of the present disclosure, *"driving conditions"* is to be understood as states of the vehicle and, consequently, the tire in which they are moving. The tire may be moving at constant speed, that is a constant translational speed and/or rotational speed, or during acceleration, or during deceleration.

Vibrations may be generated from compression and/or sounds during driving. Consequently, the vibrational sensors are configured to sense both acoustic waves inside the tire and vibrations due to contact with underlying surface, such as a road.

A road vehicle may be any type of vehicle configured to be operated on a road, such as an automobile or heavy-duty vehicles, such as trucks, buses, and construction equipment.

Optionally in some examples, including in at least one preferred example, the at least one dynamic tire property parameter of the tire is selected from the list of dynamic tire properties consisting of: contact patch length, effective rolling radius, tire rotational speed, and tread-band deformation.

As is well known in the art, a contact patch of the tire is the portion of the tore that is in actual contact with the road surface.

Optionally in some examples, including in at least one preferred example, the dynamic tire property parameter may be a contact patch length, wherein estimating the contact patch length may comprise identifying a number of consecutive vibration sensors of the plurality of vibration sensors which generates an excitation signal associated with contact patch recognition. A technical benefit may include providing an efficient and robust way of estimating contact patch length.

Optionally in some examples, including in at least one preferred example, estimating a contact patch length may further comprise: for an annotated vibration sensor: identifying an excitation signal associated with a start of the contact patch, and determining a timestamp t1 for said signal; for the annotated vibration sensor: identifying an excitation signal associated with an end of the contact patch, and determining a timestamp t2 for said signal; and for a time period between t1 and t2: counting a number of excitation signals associated with entry into the contact patch by respective trailing annotated vibration sensors. A technical benefit may include providing an efficient and robust way of estimating contact patch length.

Optionally in some examples, including in at least one preferred example, a further dynamic tire property parameter may be effective rolling radius, and wherein the processing circuitry may be configured to estimate an effective rolling radius based on the estimated contact patch length and a predetermined physical radius of the tire. A technical benefit may include providing an efficient and robust way of estimating effective rolling radius.

Optionally in some examples, including in at least one preferred example, a further dynamic tire property parameter may be tread-band deformation, and wherein estimating tire-band deformation may comprise: comparing the recorded acoustic data of the tire with prerecorded acoustic data of the tire. A technical benefit may include providing an efficient and robust way of estimating tread-band deformation.

Optionally in some examples, including in at least one preferred example, the at least one dynamic tire property parameter may be tire rotational speed, and wherein estimating the tire rotational speed may comprise, for an annotated vibration sensor, determining a time duration between an excitation signal associated with entry into a contact patch and a subsequent excitation signal associated with entry into the contact patch. A technical benefit may include providing an efficient and robust way of estimating tire rotational speed. It is to be understood that the tire rotational speed refers to the rotational speed of the tire, or the tire belt, and not the rotational speed of the wheel. During driving conditions, the rotational speed of the tire may differ from the rotational speed of the wheel. A technical benefit of the method according to the present disclosure is that the tire rotational speed may be estimated without using the rotational speed of the wheel.

Optionally in some examples, including in at least one preferred example, the plurality of vibration sensors may comprise piezoelectric microphones. A technical benefit may include providing a system which records more detailed acoustic data of the tire.

Optionally in some examples, including in at least one preferred example, the plurality of vibration sensors may further comprise audio microphones. A technical benefit may include providing a system which records not only more detailed acoustic data of the tire, but also from a wider audio spectrum.

Optionally in some examples, including in at least one preferred example, each vibration sensor is arranged on an inner surface on an inner liner of the tire. A technical benefit may include further protecting the sensors from external forces and contaminants.

Optionally in some examples, including in at least one preferred example, the plurality of vibration sensors are equidistantly arranged along said circumference of the tire. A technical benefit may include acquiring acoustic data which is easier to process, since the default, i.e. not during driving conditions and/or when the sensor is not arranged in the contact patch, angular distance between a given sensor and any neighboring sensor is known and is the same for each sensor.

Optionally in some examples, including in at least one preferred example, the plurality of vibration sensors comprise at least 50 vibration sensors. A technical benefit may include acquiring acoustic data with higher resolution.

According to a second aspect of the disclosure, a vehicle comprising the system according the first aspect of the disclosure is provided. Any technical benefit discussed in relation to the first aspect of the disclosure may be applicable to the second aspect of the disclosure.

According to a third aspect of the disclosure, a method of estimating at least one dynamic tire property parameter of a tire of a road vehicle is provided, the method comprising: annotating vibration sensors of a plurality of vibration sensors, including assigning a respective angular position in relation to at least a neighboring vibration sensor, each vibration sensor being arranged inside the tire and distributed along a circumference of the tire and being configured to generate signals in response to vibrations during driving conditions; receiving signals from the plurality of vibration sensors; recording, based on the received signals, acoustic data of the tire; and analyzing the acoustic data of the tire and estimating, based on said acoustic data, the at least one dynamic tire property parameter of the tire. Any technical benefit discussed in relation to the first aspect of the disclosure may be applicable to the third aspect of the disclosure.

Optionally in some examples, the dynamic tire property parameter may be a contact patch length, wherein estimating the contact patch length may comprise identifying a number of consecutive vibration sensors of the plurality of vibration sensors which generates an excitation signal associated with contact patch recognition. A technical benefit may include providing an efficient and robust way of estimating contact patch length.

Optionally in some examples, identifying a number of consecutive vibration sensors of the plurality of vibration sensors which generates an excitation signal associated with contact patch recognition comprises: for an annotated vibration sensor: identifying an excitation signal associated with a start of the contact patch, and determining a timestamp t1 for said signal; for the annotated vibration sensor: identifying an excitation signal associated with an end of the contact patch, and determining a timestamp t2 for said signal; and for a time period between t1 and t2: counting a number of excitation signals associated with entry into the contact patch by respective trailing annotated vibration sensors. A technical benefit may include providing an efficient and robust way of estimating contact patch length

Optionally in some examples, a further dynamic tire property parameter may be effective rolling radius, and wherein estimating an effective rolling radius is based on the estimated contact patch length and a predetermined physical radius of the tire. A technical benefit may include providing an efficient and robust way of estimating tire rotational speed.

Optionally in some examples, a further dynamic tire property parameter may be tread-band deformation, and wherein estimating tire-band deformation may comprise: comparing the recorded acoustic data of the tire with prerecorded acoustic data of the tire. A technical benefit may include providing an efficient and robust way of estimating tread-band deformation.

Optionally in some examples, the dynamic tire property parameter may be tire rotational speed, and wherein estimating the tire rotational speed may comprise, for an annotated vibration sensor, determining a time duration between an excitation signal associated with entry into a contact patch and a subsequent excitation signal associated with entry into the contact patch. A technical benefit may include providing an efficient and robust way of estimating tire rotational speed.

According to a third aspect of the disclosure, a non-transitory computer-readable storage medium may be provided, the non-transitory computer-readable storage medium comprising instructions, which when executed by a processing circuit, cause the processing circuit to perform the method according to the third aspect of the disclosure. Any technical benefit discussed in relation to the first aspect of the disclosure may be applicable to the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary schematic view of a truck comprising a tire property sensor system according to an example.
**FIG. 2** is an exemplary schematic view of a tire property sensor system according to an example.
**FIG. 3** is an exemplary schematic view of a tire comprising a plurality of equidistantly arranged sensors according to an example.
**FIG. 4A** is an exemplary diagram displaying sensor signals in the form of output voltage over time according to an example.
**FIG. 4B** are two exemplary diagram displaying compression strain of a contact patch of a tire over time, and the corresponding voltage output of a sensor arranged in the contact patch according to an example.
**FIG. 5** is an exemplary flow chart illustrating a method according to the third aspect of the disclosure according to an example.

### DETAILED DESCRIPTION

The detailed description set forth below provides information and examples of the disclosed technology with sufficient detail to enable those skilled in the art to practice the disclosure.

A problem to be solved by any one aspect of the disclosure is providing a more robust and efficient way of estimating dynamic properties of a tire, i.e. properties that may be time-variant and depend on driving conditions. A dynamic tire property may include tire inflation pressure, vertical and torsional stiffness, rotational speed, contact patch length and tire-road friction.

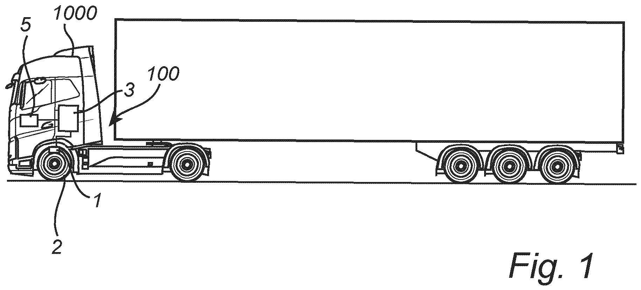

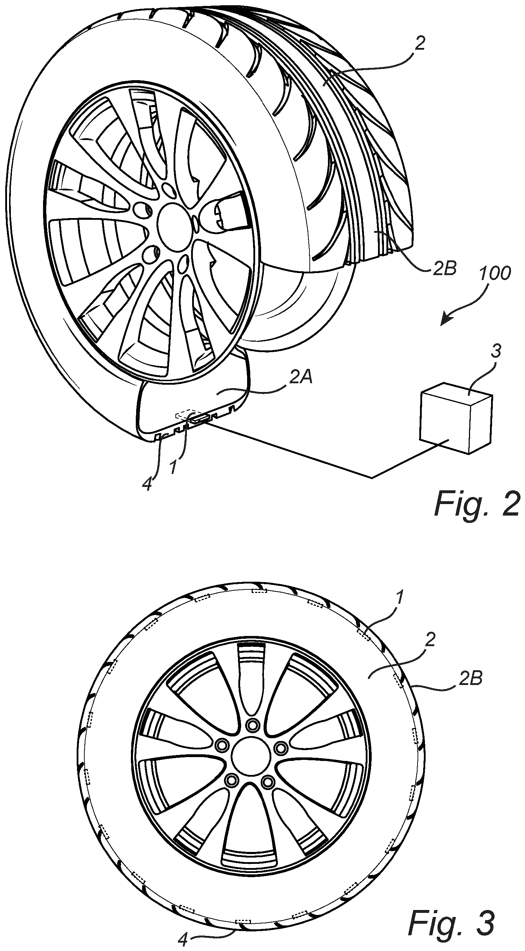

**FIG. 1** is an exemplary schematic view of a road vehicle 1000 comprising a tire property sensor system 100 according to an example. Here, the road vehicle 1000 is a truck. However, it is to be understood that the road vehicle 1000 may, e.g., be a light truck, a service vehicle, or an automobile, etc. It is further to be understood that the truck 1000 can be any type of truck, such as a heavy truck. The tire property sensor system 100 comprises a plurality of vibration sensors 1 arranged inside a tire 2. For the purpose of simplicity and brevity, only 1 vibration sensor is illustrated in **FIG. 1****.** A plurality of vibration sensors 1 is illustrated in **FIG. 3****.** Each vibration sensor 1 of the plurality of vibration sensors 1 is communicatively connected to a processing circuit 3. The processing circuit 3 is communicatively connected to and powered by a power source 5. Here, the power source 5 is indicated as being arranged inside the truck 1000. However, the power source 5 may alternatively be arranged inside the tire 2. Here, the power source 5 is communicatively connected to the plurality of vibration sensors 1 via the processing circuit 3. Thus, the power source 5 may be configured to also power the plurality of vibration sensors 1. Alternatively, the power source 5 may be directly coupled to the plurality of vibration sensors 1. Alternatively, the processing circuit 3 and the plurality of vibration sensors 1 may be coupled to different power sources 4.

**FIG. 2** is an exemplary schematic view of a tire property sensor system 100 according to an example. The tire property sensor system 100 comprises a plurality of vibration sensors 1 arranged inside a tire 2 configured to be arranged on the truck 1000, and a processing circuit 3 communicatively connected to the plurality of vibration sensors 1. For the purpose of simplicity and brevity, only 1 vibration sensor is illustrated in **FIG. 2****.** A plurality of vibration sensors 1 is illustrated in **FIG. 3****.** The tire property sensor system 100 is configured to be connected to a power source 4 for powering the plurality of vibration sensors 1 and/or the processing circuit 3, as has been explained in relation to **FIG. 1****.**

Each vibration sensor 1 is configured to sense vibration, i.e. configured to both sense acoustic waves inside the tire 2 and vibrations due to contact with underlying surface, such as a road, during driving conditions. That is, vibrations may be generated from compression and/or sounds during driving. Within the context of the present disclosure, *"driving conditions"* is to be understood as states of the truck 1000 and, consequently, the tire 2, in which they are moving. The tire 2 may move at constant speed, or accelerating, or decelerating.

That the plurality of vibration sensors 1 is arranged inside the tire 2 entails that they are embedded in the tire 2. Here, the vibration sensors 1 are arranged on an inner surface of an inner liner 2A of the tire 2. However, it is to be understood that they may be arranged in the tire tread 2B, that is embedded in the tire tread 2B, alternatively on an inner surface of the tire tread 2B, etc. That is, each vibration sensor is sandwiched between the inner liner 2A and a tire tread band 2B, or any other layer of the tire 2 interposed between the inner liner 2A and the tire tread band 2B. It is to be understood that any one vibration sensor 1 of the plurality of vibration sensors 1 may be arranged at a position different than the others, for example: one sensor 1 may be arranged inside tire tread 2B, another sensor on an inner surface of the inner liner 2A, etc. That the sensors 1 are circumferentially arranged entails that each sensor 1 may be arranged at any radial coordinate, radial distance or radius, but arranged at different angular coordinates, polar angles or azimuths from each other.

The plurality of vibration sensors 1 may comprise any type of vibration sensors, or any combination of types of vibration sensors. The plurality of vibration sensors 1 may comprise piezoelectric microphones. Additionally or alternatively, the plurality of vibration sensors may further comprise audio microphones. That is, some vibration sensors 1 may be piezoelectric microphones, whereas some vibration sensors 1 may be audio microphones.

Further, in **FIG. 1****.,** the illustrated vibration sensor 1 is arranged in the contact patch 4 of the tire 2. That is, the vibration sensor is arranged in the portion of the tire that, in any given moment, is in contact with the underlying surface. It is therefore to be understood that during one revolution of the tire 2, any given vibration sensor 1 is arranged in the contact patch 4 during a portion of the total revolution time. The time in which a vibration sensor 1 is arranged in the contact patch 4 naturally depends on the angular speed of the tire 2, the length of the contact patch 4, and therefore the effective rolling radius of the tire 2.

In **FIG. 2****.,** a plurality of vibration sensors 1 circumferentially arranged inside a tire 2 according to an example is illustrated. Here, the plurality of vibration sensors 1 are equidistantly arranged along the circumference of the tire 2. That is, each vibration sensor 1 is arranged at different angular coordinates in relation to each neighboring vibration sensor 1, but each angular distance between any two neighboring sensors 1 is the same, or at least substantially the same. For equidistantly arranged sensors 1, the angular distance to any neighboring sensor 1 may thus, for example, be found as 360°, or 2π rad, divided by the number of sensors. However, it is to be understood that this is merely an example, and the angular distance between any two neighboring sensors 1 may be different from any other two neighboring sensors 1. The plurality of vibration sensors 1 may comprise any number of vibration sensors 1. The plurality of vibration sensors 1 may comprise at least 10 vibration sensors 1, or at least 20 vibration sensors 1, or at least 30 vibration sensors 1, or at least 40 vibration sensors 1, or at least 50 vibration sensors 1, or at least 60 vibration sensors 1, or at least 70 vibration sensors 1, or at least 80 vibration sensors 1, or at least 90 vibration sensors 1, or at least 100 vibration sensors 1. By having a high number of sensors arranged along the circumference, an arrangement which allows for a continuous measurement of tire properties along the circumference is approached.

The sensor 1 is communicatively connected to a processing circuit 3. Here, a processing circuit 3 is illustrated as a generic box, and it is to be understood that the processing circuit 3 may be part of a processing unit, a control unit, or any other unit configured for performing computations. It is to be understood that a processing circuit 3 may be arranged anywhere in the vehicle 1000. For example, the processing circuit 3 may be arranged in or a part of a mainframe of the vehicle 1000, a central processing unit of the vehicle 1000, etc. The processing circuit 3 is configured to execute the function of for each vibration sensor 3, annotating the vibration sensor 1, including assigning a respective angular position in relation to at least a neighboring vibration sensor 1. It is to be understood that annotating may be performed in a variety of ways. The respective angular position of a vibration sensor 1 may be generated by the processing circuit 3. Alternatively, any one vibration sensor 1 may have a pre-assigned angular position, i.e. annotating a vibration sensor may entail that the processing circuit registers a pre-assigned angular position. A respective angular position is to be understood as an angular position in relation to other vibration sensors 1. For example, each vibration sensor 1 may be assigned a respective angular position in relation to closest neighbor.

The processing circuit 3 is further configured to execute the function of receiving signals from the plurality of vibration sensors 1. A signal is preferably a voltage output generated by a vibration sensor 1 as a result of vibration detection.

The processing circuit 3 is further configured to execute the function of recording, based on the received signals, acoustic data of the tire 2. Acoustic data may, e.g., be rendered as an acoustic profile, for example frequency or amplitude as a function of time.

The processing circuit 3 is further configured to execute the function of analyzing the acoustic data of the tire and estimating at least one dynamic tire property parameter of the tire 2.

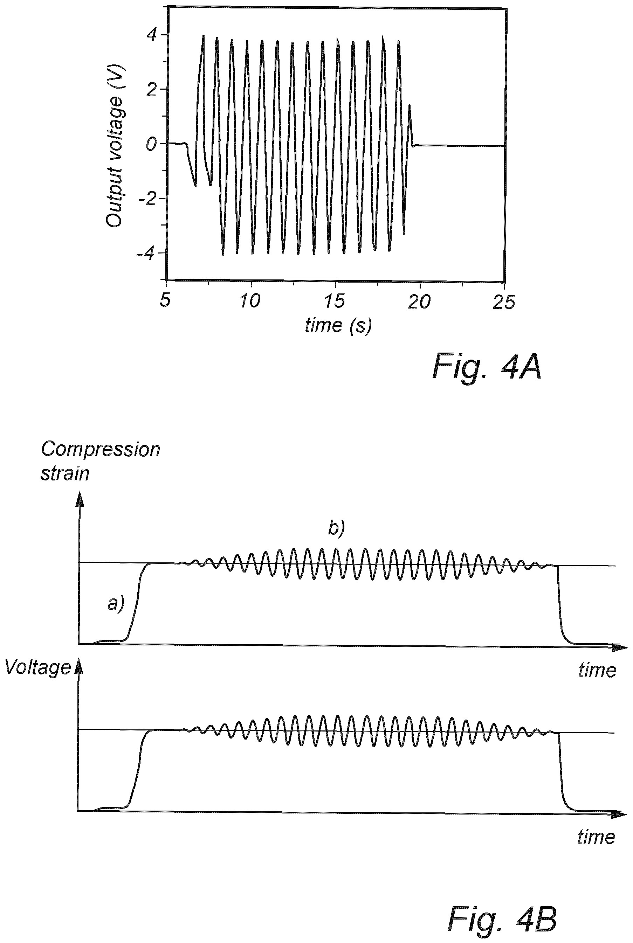

In **FIG. 4A****,** output voltage (V) as a function of time (s) rendered from signals from a vibration sensor according to an example is illustrated. The spectrum, or profile, of **FIG. 4A** may for example correspond to sound detection in the tire 2. That is, the spectrum may correspond to signals received from a vibration sensor 1 when detecting sound waves in the tire 2, for example sound waves in an air cavity of the tire 2.

In **FIG. 4B****,** two spectra are shown. The top spectrum illustrates compression strain of a vibration sensor 1 as a function of time. Such a compression strain profile may especially occur when the vibration sensor 1 is arranged in a contact patch 4 of the tire 2. This is due to the fact that, when arranged in the contact patch 4, the vibration sensor 1, being embedded in the material of the tire 2, will be more compressed in comparison to when said sensor 1 is not arranged in the contact patch 4. Consequently, the voltage output of the vibration sensor 1 as a function of time, the bottom spectrum of **FIG. 4B****,** corresponds to the compression strain profile.

As is illustrated in **FIG. 4B****,** a sharp increase a) of the compression strain generates a sharp increase of the output voltage. The disclosure is based on the realization that this may be construed as an excitation signal corresponding to entry into the contact patch 4 by the vibration sensor 1. After entry into the contact patch 4, a plateau is maintained until the vibration sensor 1 exits the contact patch 4. It should be noted that the signal, during the plateau, comprises an oscillating component as illustrated by Fig. 3A, since the vibration sensor 1, when arranged in the contact patch 4, may simultaneously generate signals due to excitation by sound waves in the tire 2. The exit of the contact patch corresponds to a sharp decrease c) of the compression strain and the corresponding voltage output. Hereby, entry into the contact patch 4 may be identified as an excitation signal. Consequently, subsequent contact patch 4 entries associated with trailing vibration sensors 1 may be recorded. That is, a number of consecutive vibration sensors 1 of the plurality of vibration sensors 1 which generates an excitation signal associated with contact patch 4 recognition may be identified. Correspondingly, it has been realized that concurrent compression strain plateaus, and thus voltage output plateaus, may be identified, or recorded. In this way, the number of vibration sensors 1 which, at any given moment, is arranged in the contact patch 4 may be identified. If the distance, e.g. the angular distance, between such vibration sensors 1 is known, the length of the contact patch 4 may be estimated. Hence, the disclosure is based on the realization that having plurality of vibration sensors 1, such as at least two vibration sensors 1, arranged in a contact patch 4 at any given moment, estimation of the length of the contact patch 4 may be improved. If the vibration sensors 1 are equidistantly arranged, as illustrated in **FIG. 3****,** the angular distance between any two vibration sensors 1 is constant, further facilitating easy estimation of the contact patch 4 length. However, it is to be understood that the distance between the sensors may differ for sensors arranged in the contact patch. Further, it has been realized that the contact patch 4 length in turn may be used to estimate further dynamic tire properties. For example, contact patch 4 length may be used to estimate the effective rolling radius of the tire 2.

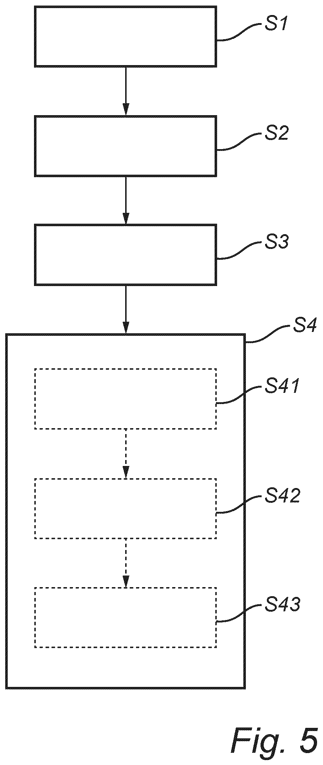

Different ways of estimating the contact patch 4 length and further dynamic tire properties will be explained further in relation to **FIG. 5** below.

In **FIG. 5****.,** a method of estimating at least one dynamic tire property parameter of a tire 2 of a road vehicle 1000 is illustrated in an exemplary flow chart. The method may, e.g., be executed by a processing circuit 3. Further, instructions for executing the method may be stored on a non-transitory computer-readable storage medium. Thus, the instructions, when executed by a processing circuit 3, may cause the processing circuit 3 to perform the method.

The method comprises: annotating S1 vibration sensors 1 of a plurality of vibration sensors 1, including assigning a respective angular position in relation to at least a neighboring vibration sensor 1, each vibration sensor being arranged inside the tire 2 and distributed along a circumference of the tire 2 and being configured to generate signals in response to vibrations during driving conditions.

The method further comprises: receiving S2 signals from the plurality of vibration sensors 1; recording S3, based on the received signals, acoustic data of the tire; and analyzing S4 the acoustic data of the tire 2 and estimating, based on said acoustic data, the at least one dynamic tire property parameter of the tire 2.

As has been discussed above, the dynamic tire property parameter may be a contact patch 4 length, wherein estimating the contact patch length may comprise identifying a number of consecutive vibration sensors 1 of the plurality of vibration sensors 1 which generates an excitation signal associated with contact patch recognition. Identifying a number of consecutive vibration sensors of the plurality of vibration sensors which generates an excitation signal associated with contact patch recognition may be performed in a variety of ways. For example, identifying a number of consecutive vibration sensors of the plurality of vibration sensors which generates an excitation signal associated with contact patch recognition may comprise: for an annotated vibration sensor 1: identifying S41 an excitation signal associated with a start of the contact patch 4, including determining a timestamp t1 for the signal, and for the annotated vibration sensor 1: identify S42 excitation signal associated with an end of the contact patch 4, including determining a timestamp t2 for said signal; and for a time period between t1 and t2: counting S43 a number of excitation signals associated with entry into the contact patch 4 by respective trailing annotated vibration sensors 1.

It is to be understood that more than one dynamic tire property parameter may be estimated, or determined. A further dynamic tire property parameter may be effective rolling radius, and wherein estimating an effective rolling radius may be based on the estimated contact patch 4 length and a predetermined physical radius of the tire 2.

A further dynamic tire property parameter may be tread-band deformation, and wherein estimating tread-band deformation may comprise: comparing the recorded acoustic data of the tire 2 with prerecorded acoustic data of the tire 2. As is well known in the art, acoustic data of the tire 2 may be prerecorded in a variety of ways. For example, prerecorded acoustic data of the tire 2 based on testing may be stored in the processing circuit 3, or any other storage medium of the vehicle 1000, wherein the processing circuit 3 is configured to access such prerecorded acoustic data. It has been realized that a difference between prerecorded acoustic data and acoustic data recorded during driving conditions may be indicative of the material properties of the tire, such as elasticity, shape, and dimensions, have changed. Further, it may be indicative of the presence of any wear or damage to the tire 2, such as a rip or tear. Consequently, major damages to the tire 2, such as a tire explosion, may be identified. A tire explosion may additionally or alternatively be identified from each vibration sensor 1 of the plurality of vibration sensors 1 generating an excitation signal associated with tire explosion simultaneously.

The dynamic tire property parameter may be tire rotational speed, and wherein estimating the tire rotational speed may comprise, for an annotated vibration sensor 1, determining a time duration between an excitation signal associated with entry into a contact patch 4 and a subsequent excitation signal associated with entry into the contact patch 4. That is, the time between a first entry into the contact patch 4 and a second entry into the contact patch 4 by the same sensor 1 may be measured. Naturally, this corresponds to one revolution of the tire 2, and as such, the angular speed of the tire 2 may be estimated.

Examples of the disclosure follows.

**Example 1:** A tire property sensor system 100 for a tire 2 of a road vehicle 1000, the system 100 comprising: a plurality of vibration sensors 1 arranged inside the tire 2 and distributed along a circumference of the tire 2, each vibration sensor 1 of the plurality of vibration sensors 1 being configured to generate signals in response to vibrations during driving conditions; and a processing circuit 3 communicatively connected to the plurality of vibration sensors 1; wherein the processing circuit 3 is configured to execute the functions of: for each vibration sensor 1, annotating the vibration sensor 1, including assigning a respective angular position in relation to at least a neighboring vibration sensor 1; receiving signals from the plurality of vibration sensors 1; recording, based on the received signals, acoustic data of the tire 2; analyzing the acoustic data of the tire 2 and estimating at least one dynamic tire property parameter of the tire 2.

**Example 2:** The tire property sensor system 100 according to Example 1, wherein the at least one dynamic tire property parameter of the tire 2 is selected from the list of dynamic tire properties consisting of: contact patch 4 length, effective rolling radius, tire rotational speed, and tread-band deformation.

**Example 3:** The tire property sensor system 100 according to Example 2, wherein the at least one dynamic tire property parameter is a length contact patch length, wherein estimating the contact patch 4 length comprises identifying a number of consecutive vibration sensors 1 of the plurality of vibration sensors 1 which generates an excitation signal associated with contact patch recognition.

**Example 4:** The tire property sensor system according to Example 3, wherein estimating a contact patch 4 length further comprises: for an annotated vibration sensor 1: identifying an excitation signal associated with a start of the contact patch 4, and determining a timestamp t1 for said signal; for the annotated vibration sensor 1: identifying an excitation signal associated with an end of the contact patch 4, and determining a timestamp t2 for said signal; and for a time period between t1 and t2: counting a number of excitation signals associated with entry into the contact patch 4 by respective trailing annotated vibration sensors 1.

**Example 5:** The tire property sensor system according to Example 2, wherein a further dynamic tire property parameter is effective rolling radius, and wherein the processing circuitry 3 is configured to estimate an effective rolling radius based on the estimated contact patch 4 length and a predetermined physical radius of the tire 2.

**Example 6:** The tire property sensor system 100 according to Example 2, wherein a further dynamic tire property parameter is tread-band deformation, and wherein estimating tread-band deformation comprises: comparing the recorded acoustic data of the tire 2 with prerecorded acoustic data of the tire 2.

**Example 7:** The tire property sensor system 100 according to Example 2, wherein the at least one dynamic tire property parameter is tire rotational speed, and wherein estimating the tire rotational speed comprises, for an annotated vibration sensor 1, determining a time duration between an excitation signal associated with entry into a contact patch 4 and a subsequent excitation signal associated with entry into the contact patch 4.

**Example 8:** The tire property sensor system 100 according to any one of the preceding Examples, wherein the plurality of vibration sensors 1 comprises piezoelectric microphones.

**Example 9:** The tire property sensor system 100 according to claim Example 8, wherein the plurality of vibration sensors 1 further comprises audio microphones.

**Example 10:** The tire property sensor system 100 according to any one of the preceding Examples, wherein each vibration sensor 1 is arranged on an inner surface on an inner liner 2A of the tire 2.

**Example 11:** The tire property sensor system 100 according to any one of the preceding Examples, wherein the plurality of vibration sensors 1 are equidistantly arranged along said circumference of the tire 2.

**Example 12:** The tire property sensor system 100 according to any one of the preceding claims, wherein the plurality of vibration sensors 1 comprises at least 50 vibration sensors.

**Example 13:** A vehicle 1000 comprising the system 100 according to any one of Examples 1-12.

**Example 14:** A method of estimating at least one dynamic tire property parameter of a tire 2 of a road vehicle 1000, the method comprising: annotating S1 vibration sensors 1 of a plurality of vibration sensors 1, including assigning a respective angular position in relation to at least a neighboring vibration sensor 1, each vibration sensor 1 being arranged inside the tire 2 and distributed along a circumference of the tire 2 and being configured to generate signals in response to vibrations during driving conditions; receiving S2 signals from the plurality of vibration sensors 1; recording S3, based on the received signals, acoustic data of the tire 2; and analyzing S4 the acoustic data of the tire 2 and estimating, based on said acoustic data, the at least one dynamic tire property parameter of the tire 2.

**Example 15:** The method according to Example 14, wherein the dynamic tire property parameter is a contact patch 4 length, wherein estimating the contact patch 4 length comprises identifying a number of consecutive vibration sensors of the plurality of vibration sensors which generates an excitation signal associated with contact patch recognition.

**Example 16:** The method according to Example 15, wherein identifying a number of consecutive vibration sensors 1 of the plurality of vibration sensors 1 which generates an excitation signal associated with contact patch recognition comprises: for an annotated vibration sensor 1: identifying S41 an excitation signal associated with a start of the contact patch 4, and determining a timestamp t1 for said signal: for the annotated vibration sensor 1: identifying S42 an excitation signal associated with an end of the contact patch 4, and determining a timestamp t2 for said signal; and for a time period between t1 and t2: counting S43 a number of excitation signals associated with entry into the contact patch 4 by respective trailing annotated vibration sensors.

**Example 17:** The method according to Example 15 and 16, wherein a further dynamic tire property parameter is effective rolling radius, and wherein estimating an effective rolling radius is based on the estimated length of the contact patch length 4 and a predetermined physical radius of the tire 2.

**Example 18:** The method according to any one of Examples 15-17, wherein a further dynamic tire property parameter is tread-band deformation, and wherein estimating tire-band deformation comprises: comparing the recorded acoustic data of the tire 2 with prerecorded acoustic data of the tire 2.

**Example 19:** The method according to Example 14, wherein the dynamic tire property parameter is tire rotational speed, and wherein estimating the tire rotational speed comprises, for an annotated vibration sensor 1, determining a time duration between an excitation signal associated with entry into a contact patch 4 and a subsequent excitation signal associated with entry into the contact patch 4.

**Example 20:** A non-transitory computer-readable storage medium comprising instructions, which when executed by a processing circuit 3, cause the processing circuit 3 to perform the method of any one of Examples 14-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A tire property sensor system (100) for a tire (2) of a road vehicle (1000), the system (100) comprising:
a plurality of vibration sensors (1) arranged inside the tire (2) and distributed along a circumference of the tire (2), each vibration sensor (1) of the plurality of vibration sensors (1) being configured to generate signals in response to vibrations during driving conditions; and
a processing circuit (3) communicatively connected to the plurality of vibration sensors (1);
wherein the processing circuit (3) is configured to execute the functions of:
for each vibration sensor (1), annotating the vibration sensor (1), including assigning a respective angular position in relation to at least a neighboring vibration sensor (1);
receiving signals from the plurality of vibration sensors (1);
recording, based on the received signals, acoustic data of the tire (2);
analyzing the acoustic data of the tire (2) and estimating at least one dynamic tire property parameter of the tire (2).

2. The tire property sensor system (100) according to claim 1, wherein the at least one dynamic tire property parameter of the tire (2) is selected from the list of dynamic tire properties consisting of: length of a contact patch (4), effective rolling radius, tire rotational speed, and tread-band deformation.

3. The tire property sensor system (100) according to claim 2, wherein the at least one dynamic tire property parameter is a length of a contact patch (4), wherein estimating the length of the contact patch (4) comprises identifying a number of consecutive vibration sensors (1) of the plurality of vibration sensors (1) which generates an excitation signal associated with contact patch recognition.

4. The tire property sensor system (100) according to claim 3, wherein estimating a length of a contact patch (4) further comprises:
for an annotated vibration sensor (1): identifying an excitation signal associated with a start of the contact patch (4), and determining a timestamp t1 for said signal;
for the annotated vibration sensor (1): identifying an excitation signal associated with an end of the contact patch (4), and determining a timestamp t2 for said signal; and
for a time period between t1 and t2: counting a number of excitation signals associated with entry into the contact patch (4) by respective trailing annotated vibration sensors (1).

5. The tire property sensor system (100) according to claim 2, wherein the at least one dynamic tire property parameter is tire rotational speed, and wherein estimating the tire rotational speed comprises, for an annotated vibration sensor (1), determining a time duration between an excitation signal associated with entry into a contact patch (4) and a subsequent excitation signal associated with entry into the contact patch (4).

6. The tire property sensor system (100) according to any one of the preceding claims, wherein the plurality of vibration sensors (1) comprises piezoelectric microphones.

7. The tire property sensor system (100) according to claim 6, wherein the plurality of vibration sensors (1) further comprises audio microphones.

8. The tire property sensor system (100) according to any one of the preceding claims, wherein each vibration sensor (1) is arranged on an inner surface on an inner liner (2A) of the tire (2).

9. The tire property sensor system (100) according to any one of the preceding claims, wherein the plurality of vibration sensors (1) are equidistantly arranged along said circumference of the tire (2).

10. The tire property sensor system (100) according to any one of the preceding claims, wherein the plurality of vibration sensors (1) comprises at least 50 vibration sensors (1).

11. A vehicle (1000) comprising the system (100) according to any one of claims 1-10.

12. A method of estimating at least one dynamic tire property parameter of a tire (2) of a road vehicle (1000), the method comprising:
annotating (S1) vibration sensors (1) of a plurality of vibration sensors (1), including assigning a respective angular position in relation to at least a neighboring vibration sensor (1), each vibration sensor being arranged inside the tire (2) and distributed along a circumference of the tire (2) and being configured to generate signals in response to vibrations during driving conditions;
receiving (S2) signals from the plurality of vibration sensors (1);
recording (S3), based on the received signals, acoustic data of the tire (2); and
analyzing (S4) the acoustic data of the tire (2) and estimating, based on said acoustic data, the at least one dynamic tire property parameter of the tire (2).

13. The method according to claim 12, wherein the dynamic tire property parameter is a length of a contact patch (4), wherein estimating the length of the contact patch (4) comprises identifying a number of consecutive vibration sensors (1) of the plurality of vibration sensors (1) which generates an excitation signal associated with contact patch recognition.

14. The method according to claim 13, wherein identifying a number of consecutive vibration sensors of the plurality of vibration sensors which generates an excitation signal associated with contact patch recognition comprises:
for an annotated vibration sensor (1): identifying (S41) an excitation signal associated with a start of the contact patch (4), and determining a timestamp t1 for said signal;
for the annotated vibration sensor (1): identifying (S42) an excitation signal associated with an end of the contact patch (4), and determining a timestamp t2 for said signal; and
for a time period between t1 and t2: counting (S43) a number of excitation signals associated with entry into the contact patch by respective trailing annotated vibration sensors (1).

15. The method according to claim 12, wherein the dynamic tire property parameter is tire rotational speed, and wherein estimating the tire rotational speed comprises, for an annotated vibration sensor (1), determining a time duration between an excitation signal associated with entry into a contact patch (4) and a subsequent excitation signal associated with entry into the contact patch (4).
